# EUROPEAN PATENT APPLICATION

(11) **EP 4 369 264 A1**
(43) Date of publication of application: **15.05.2024**
(21) Application number: 22206209.3
(22) Date of filing: 08.11.2022
(51) Int. Cl.: G06Q 10/063

(54) **ADJUSTABLE EVENT LOGS**

(71) Applicant: Celonis SE, 80333 München (DE)
(72) Inventor: Klenk, Martin, 80639 München (DE); Chaluvadi, Sasidhar, 80333 München (DE); Arac, Ardan, New York, 10007 (US); Koytek, Philipp, 80333 München (DE); Toro, David, 80333 München (DE); Gualotuña, Paul, 80333 München (DE)
(74) Representative: 2s-ip Schramm Schneider Bertagnoll Patent- und Rechtsanwälte Part mbB

(57) **Abstract**

The present invention relates to a computer-implemented method to control a graph structure, wherein the graph structure represents a process. The graph structure is initially generated by generating multiple nodes and connecting these nodes by edges according to an algorithmically defined sequence, in particular a happy path of the process.

The method enables to adapt the generated graph structure flexibly by adding and/or removing nodes and their respective edges to and/or from the happy path thereby updating respective key performance indicators. The key performance indicators assigned to an edge connecting two nodes of the generated graph structure are determined such that the key performance indicators capture information not only on the edge but also on all other alternative process paths between the respective two nodes involving further unselected nodes.

## Description

### Field of the invention

The present invention relates to a computer-implemented method to control a graph structure, wherein the graph structure represents a process.

### Background of the invention

Usually, a process comprises a number of process steps, wherein executing the process steps generates a process instance of the process. The number of process steps may be large, in particular for real-world processes, such that many distinct process steps may be performed in different sequences to achieve a process goal.

For state-of-the-art process mining, the process steps are recorded in a process protocol, which comprises at least three attributes. In a first attribute, an identifier of the process instance or case is stored. In a second attribute, a label of the respective process step is stored. In a third attribute, an order of the respective process step within the sequence of process steps for the respective process instance is stored. The process protocol therefore provides an analyst a comprehensive and complete view of each process instance.

However, analyzing process protocols of real-world processes to find meaningful insights can be challenging due to the presence of irrelevant process steps and a complex process graph with intertwined process paths resulting from a large number of process steps.

Depending on the user's context, only a subset of the process steps or activities in the process protocol may be relevant for analysis. The presence of irrelevant activities in the process protocol can therefore lead to multiple branches or process paths that are distracting from the main behavior of the process making it difficult to analyze the process.

The presence of many unique process steps in the process can lead to a very complex process graph as there can be many different sequences of process steps, also called variants. The process graphs generated by process modeling notations of prior art are therefore often termed spaghetti graphs. A process being executed according to several variants therefore results in a process graph which is very difficult to read and understand. In other words, users may miss the key process steps being hidden in the spaghetti.

Current process modeling notations may allow a user to zoom-in or zoom-out of a process graph. However, zooming of the process graph is accompanied by a loss of information since nodes out of the zoom and their respective edges are just removed from the process graph.

### Object of the invention

It is therefore an object of the present invention to provide a computer-implemented method to control a process graph in a way that reduces the above identified problems at least partially.

### Solution according to the invention

This object is solved by the computer-implemented method according to the independent claim. Further aspects of the invention and advantageous embodiments are specified in the dependent claims.

Accordingly, provided is a computer-implemented method to control a graph structure, wherein the graph structure comprises a number of nodes being connected by a number of edges. The graph structure represents a process, wherein the process comprises a number of process steps. Each process step is represented by a node. The process is executed by executing the process steps, wherein each execution of a process generates a process instance. The process steps of the process instance are stored in an ordered sequence in a process protocol.

The method comprises:
- generating an initial graph structure comprising an initial number of nodes in a predefined sequence, wherein each node represents a process step type, determining a count of process steps of corresponding process step type from at least one process protocol, determining a transition between process steps of consecutive process step types in the predefined sequence, wherein each determined transition is represented by an edge, and visualizing the generated graph structure by way of a visualization device,
- receiving, by way of an input control of a user interface of the visualization device, a selection of at least one additional process step type,
- generating an updated graph structure by querying process steps assigned to the process step types represented by the initial nodes and process steps assigned to the at least one additional process step type from the at least one process protocol, and visualizing the updated graph structure, and
- determining at least one first key performance indicator for each edge, wherein the at least one first key performance indicator is aggregated from the determined transition and its corresponding alternative transitions between process steps of unselected process step types, wherein the at least one first key performance indicator is represented in relation to the corresponding edge in the graph structure.

The initial graph structure may be provided, e.g., by the happy path. The happy path is a process graph discovered from the at least one process protocol, wherein the process graph is optimized with respect to predefined quality metrics, such as the fitness, the simplicity, the precision, and/or the generalizability of the process graph. Usually, the happy path comprises nodes which represent the key process step types and therefore is a good starting point for analyzing complex process graphs. In other words, the predefined sequence may be algorithmically defined.

The gist of the present invention is that key performance indicators assigned to the edges connecting two nodes of the initial graph structure may still capture information on all other process paths involving nodes that represent less important process step types. This advantage is achieved by aggregating the respective key performance indicator from the determined transition which is represented by an edge of the initial graph structure and its corresponding alternative transitions between process steps of unselected process step types. The unselected process step types include all process step types that are not part of a current graph structure. The current graph structure may be the initial graph structure or any updated graph structure.

The method according to the invention further enables to adaptively select further process step types to be part of the graph structure thereby generating an updated graph structure. To update the graph structure, all process steps of the at least one process protocol are queried, however, only those process steps assigned to the process step types of the initial graph structure and process steps assigned to the selected additional process step type are represented in the graph structure. Hence, for each update of the graph structure, the key performance indicators may be recalculated based on the process protocol on-the-fly, in particular in real time, as the at least one process protocol is entirely stored in main memory.

Preferably, the transition between process steps of two consecutive process step types in the initial graph structure is determined based on the observed frequency of the respective process steps in executions of the process.

Preferably, the at least one first key performance indicator for each transition is aggregated by averaging values of the at least one first key performance indicator for the determined transition and each of its corresponding alternative transitions.

Preferably, the at least one first key performance indicator is selected from a first group of key performance indicators. The first group consists of:
- throughput time,
- case count,
- activity count,
- a configurable key performance indicator, and
- combinations thereof.

The at least one first key performance indicator, in particular the throughput time, may be determined by the median, the mean, or the trimmed mean of the values of the at least one key performance indicator for the determined transition and each of its corresponding alternative transitions. The throughput time, the case count and the activity count are standard key performance indicators that may be calculated out-of-the-box based on queries in the at least one process protocol.

Further, a configurable key performance indicator, such as an automation rate, may be configured manually in order to be determined for the nodes or edges of the graph structure. The automation rate may be determined from an attribute of the process protocol, in which a one-bit flag is stored for each process step that was executed automatically. Hence, the automation rate for a process step type under consideration may be computed by the fraction of corresponding process steps having the one-bit flag stored in the corresponding attribute.

Preferably, the method further comprises:
- receiving, by way of the input control, a selection of at least one individual additional transition between a pair of selected process step type,
- further querying the selected at least one additional transition from the process protocol, creating an updated graph structure on basis of the queried transition and visualizing the updated graph structure.

Preferably, the method further comprises determining at least one second key performance indicator for each process step type, wherein the at least one second key performance indicator is represented in relation to the node representing the corresponding process step type.

Preferably, the at least one second key performance indicator is selected from a second group of key performance indicators. The second group consists of:
- case count,
- process step count, and
- combinations thereof.

The second key performance indicator is determined from the process steps assigned to a process step type, instead of their transitions to process steps of consecutive process step types. Therefore, the information provided by the second key performance indicator is limited to the process steps assigned to a process step type, in contrast to the first key performance indicator.

In one embodiment, data of the initial graph structure is stored in a storage device. Each query of process steps assigned to the at least one selected additional process step type returns a difference to the stored data. The updated graph structure is determined by adding the difference to the stored data. The difference is stored in the storage device.

In other words, this feature enables querying a fraction of the at least one process protocol for each update of the graph structure (querying deltas) instead of querying the full data stored in the at least one process protocol.

The advantage of this embodiment is that the same process steps are only query once and stored in a storage device for further use. Updating the graph structure therefore reduces to querying only the process steps of the respective process step types that have not yet been queried and merging the stored process steps with the new process steps. The data size of each subsequent query is therefore efficiently reduced. The first key performance indicator and the second key performance indicators may be computed in the same way as when querying each process step of the respective process types under consideration for each update. This advantage may be most useful for historical process data, i.e., recorded process data stored in a self-contained data model that is not updated anymore.

### Short summary of the figures

Some embodiments of the invention are described in further detail in combination with the figures, which show:
- Fig. 1: a flow chart providing an overview over the method steps according to an embodiment of the invention;
- Fig. 2: a flow chart summarizing the method steps to determine a value of a key-performance indicator for a graph structure according to an aspect of the invention; and
- Fig. 3: an example for determining throughput times in a graph structure according to prior art in comparison to a graph structure according to an aspect of the invention;

### Detailed description of the invention

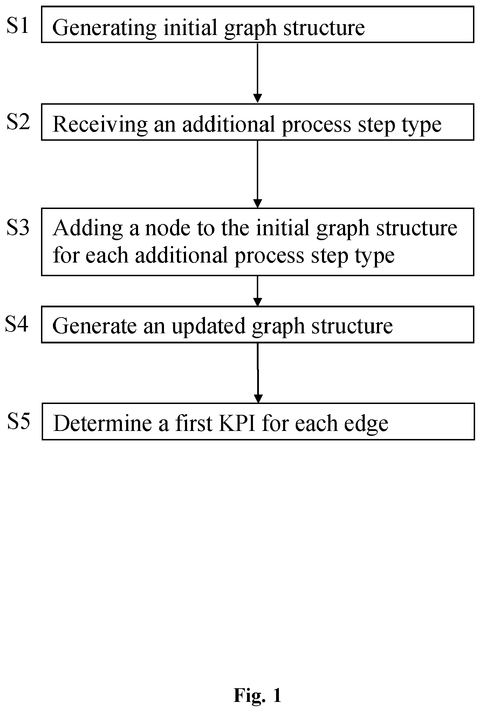

Fig. 1 shows a flow chart providing an overview over the method steps according to an embodiment of the invention.

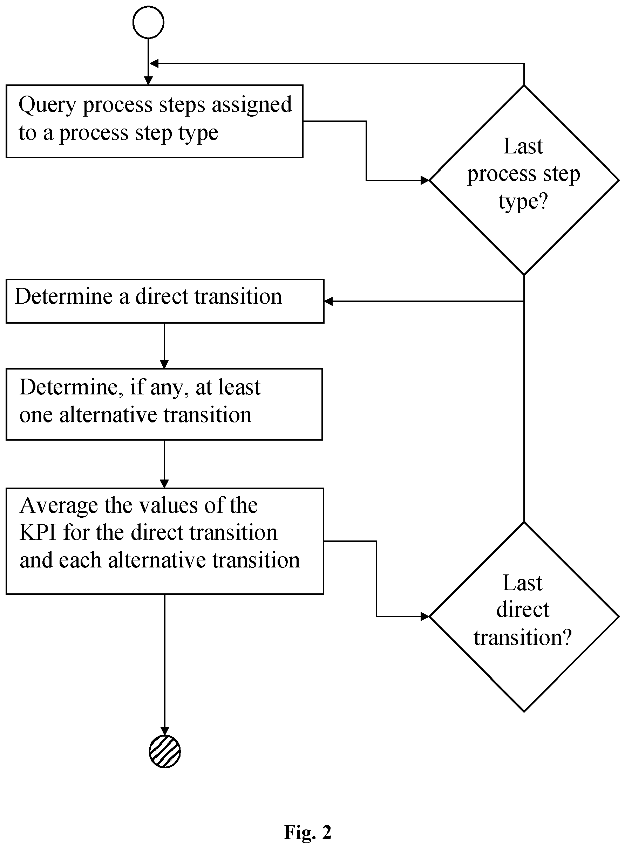

In a first method step, S1, an initial graph structure is generated. The initial graph structure may be generated for instance by discovering the happy path of the at least one process protocol. For the initial graph structure, at least one first key performance indicator may be determined for each edge. The method steps relevant for determining the first key performance indicator according to an aspect of the invention are discussed with reference to figure 2.

In a second method step, S2, an additional process step type is received. The additional process step type may be selected by the user, e.g., by way of a user interface. The user interface may provide a list of unselected process step types, i.e., process step types that are not part of the initial graph structure (or any updated graph structure, respectively).

Based on the additional process step type, a further node is generated and added to the initial graph structure in third step, S3. In other words, a node representing the additional process step type is generated and connected to nodes of the initial graph structure representing process step types to which process steps are assigned for which a transition to process steps assigned to the additional process step type is recorded in the at least one process protocol. In case that more than one additional process step type is received in the second step S2, a node for each of the additional process step type is added to the initial graph structure.

In a fourth step, S4, an updated graph structure is generated. Preferably, the process steps for each process step type of the initial graph structure and each of the additional process step types are queried from the at least one process protocol on-the-fly to determine the respective transitions which are represented by the edges connecting the nodes.

In a fifth step, S5, a first key performance indicator is determined for each edge, i.e., for each transition between process steps being assigned to consecutive process step types in the at least one process protocol.

Further, a second key performance indicator may be determined, wherein the second key performance indicator is assigned to each node.

**Fig. 2** shows a flow chart summarizing the method steps to determine a value of a key-performance indicator for a graph structure according to an aspect of the invention.

The opening circle represents the start of the method steps required for determining a value of a first key performance indicator according to an aspect of the invention and the shaded circle represents the end of the respective method.

For each process step type of the process protocol, the respective process steps are queried. The process step types of the process protocol include process step types to be represented in the graph structure, also called selected process step types, and unselected process step types that are "skipped" in the graph structure. Technically, the unselected process step types may be skipped in the graph structure by mapping the respective process steps to NULL by the operator building the graph structure. Each selected process step type is represented by a node in the graph structure to be determined. Transitions between process steps of different process step types are represented by edges, in particular directed edges, in the graph structure. Between the process steps queried from the at least one process protocol, direct transitions are determined. Direct transitions are those transitions defined by process steps that are assigned to two consecutive process step types in the process protocol. Two process step types are consecutive, if their respective process steps are executed in direct succession in at least one process instance recorded in the at least one process protocol. Each direct transition is represented by a directed edge in the graph structure.

Similarly, alternative transitions between process steps of two consecutive process step types are determined. Alternative transitions include further unselected process step types, i.e., process step types which are not to be represented in the graph structure. An alternative transition between two process steps therefore is a sequence of direct transitions including further process steps with respect to the corresponding direct transition between the two process steps.

Having determined the direct transition and each of its alternatives, a value for first key performance indicator under consideration is computed for the direct transition in each of its alternatives. The determined values are aggregated, preferably using the median, and represented in relation to the directed edge representing the respective direct transition. This procedure is repeated for every direct transition to be represented in the graph structure.

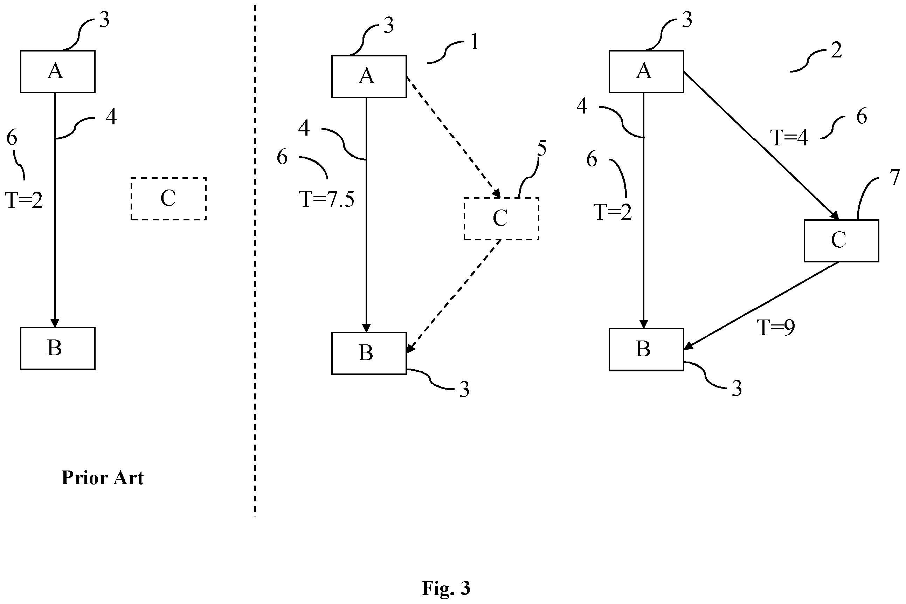

**Fig. 3** shows an example for determining throughput times in a graph structure according to prior art in comparison to a graph structure according to an aspect of the invention.

The exemplary process graph shown in Fig. 3 is stripped-down to focus purely on the core feature of the method according to the invention. The first key performance indicator used in the example of Fig. 3 is the throughput time. The data for the throughput times determined for the process graphs of Fig. 3 are summarized in Table 1.

**Table 1: Throughput times for the exemplary process graph of Fig. 3.**

| Case ID | Start node | End node | Throughput time |
|---|---|---|---|
| 1 | A | B | 2 |
| 2 | A | B | 2 |
| 3 | A | C | 5 |
| 4 | A | C | 3 |
| 3 | C | B | 7 |
| 4 | C | B | 11 |

The happy path of this example is given simply by the direct transition from process steps of process step type "A" to process steps of process step type "B", characterized by a throughput time of T=2 on average. On the left column of Fig. 3, separated by a vertical dashed line from two further columns to the right of Fig. 3, the representation of the happy path according to prior art is shown. Since process steps of type "C" does not form part of the happy path, the process instances involving alternative transitions over process step "C" are missing in represented process graph according to prior art.

In the middle column of Fig. 3, the happy path is visualized according to an aspect of the invention. Note that all dashed elements, i.e., the process step type "C" and the direct transitions from process steps of type "A" to process steps of type "C" as well as from process steps of type "C" to process steps of type "B", each represented by a dashed arrow, are not part of the representation of the happy path, but are indicated in Fig. 3 to illustrate the difference to prior art. According to an aspect of the invention, the throughput time for the direct transition between process steps of type "A" to process steps of type "B" according to the happy path is no longer determined in isolation from unselected process step types but determined by aggregating the throughput time assigned to the direct transition and the respective throughput times assigned to the alternative transitions.

The throughput time assigned to the directed edge in the graph structure representing the happy path is determined on instance level. In the present example, there are two process instances in which the direct transition from "A" to "B" was recorded, case IDs 1 and 2, each with a throughput time of T=2. Further, there are two process instances, case IDs 3 and 4, in which the direct transition from "A" two "C" was recorded, having throughput times of T=3 and T=5, respectively. In the latter two process instances, the direct transition from "C" to "B" was further recorded, having throughput times of T=7 and T=11, respectively. In this example, the alternative transitions recorded in the two process instances 3 and 4 involving process steps of type "C" have combined throughput times of T=12 and T=14, respectively. The assignment of a direct transition to its corresponding process instance is stored in the at least one process protocol. To conclude this example, the throughput times of the direct transitions between process steps of type "A" and process steps of type "B" and its alternative transitions over process steps of type "C", i.e., T=(2, 2, 12, 14), are aggregated, e.g., by determining the mean throughput time. In this example, the mean throughput time is T=7.5.

Upon selecting the process step type "C", a further node representing process step type "C" is generated based on which an updated graph structure 2 is generated, as shown in the right column of Fig. 3. The throughput times assigned to each directed edge in the updated graph structure 2 are determined by averaging the respective entries in Table 1, e.g., using the median.

### List of reference numerals:

- 1: initial graph structure
- 2: updated graph structure
- 3: node
- 4: edge
- 5: node representing an unselected process step type
- 6: key performance indicator
- 7: node representing an selected additional process step type

## Claims

1. Computer-implemented method to control a graph structure, wherein the graph structure comprises a number of nodes being connected by a number of edges, wherein the graph structure represents a process, wherein the process comprises a number of process steps, wherein each process step is represented by a node, wherein the process is executed by executing the process steps, wherein each execution of a process generates a process instance, wherein the process steps of the process instance are stored in an ordered sequence in a process protocol, the method comprising:
- generating an initial graph structure comprising an initial number of nodes in a predefined sequence, wherein each node represents a process step type, determining a count of process steps of corresponding process step type from at least one process protocol, determining a transition between process steps of consecutive process step types in the predefined sequence, wherein each determined transition is represented by an edge, and visualizing the generated graph structure by way of a visualization device,
- receiving, by way of an input control of a user interface of the visualization device, a selection of at least one additional process step type,
- generating an updated graph structure by querying process steps assigned to the process step types represented by the initial nodes and process steps assigned to the at least one additional process step type from the at least one process protocol, and visualizing the updated graph structure, and
- determining at least one first key performance indicator for each edge, wherein the at least one first key performance indicator is aggregated from the determined transition and its corresponding alternative transitions between process steps of unselected process step types, wherein the at least one first key performance indicator is represented in relation to the corresponding edge in the graph structure.

2. The method of claim 1, wherein the transition between process steps of two consecutive process step types in the initial graph structure is determined based on the observed frequency of the respective process steps in executions of the process.

3. The method of claim 1, wherein the at least one first key performance indicator for each transition is aggregated by averaging values of the at least one first key performance indicator for the determined transition and each of its corresponding alternative transitions.

4. The method of claim 1, wherein the at least one first key performance indicator is selected from a first group of key performance indicators, the first group consisting of:
- throughput time,
- case count,
- activity count,
- a configurable key performance indicator, and
- combinations thereof.

5. The method of claim 1, further comprising
- receiving, by way of the input control, a selection of at least one individual additional transition between a pair of selected process step type,
- further querying the selected at least one additional transition from the process protocol, creating an updated graph structure on basis of the queried transition and visualizing the updated graph structure.

6. The method of claim 1, further comprising determining at least one second key performance indicator for each process step type, wherein the at least one second key performance indicator is represented in relation to the node representing the corresponding process step type.

7. The method of claim 5, wherein the at least one second key performance indicator is selected from a second group of key performance indicators, the second group consisting of:
- case count,
- process step count, and
- combinations thereof.

8. The method of claim 1, wherein data of the initial graph structure is stored in a storage device, wherein each query of process steps assigned to the at least one selected additional process step type returns a difference to the stored data, wherein the updated graph structure is determined by adding the difference to the stored data, and wherein the difference is stored in the storage device.
